# FASCICULE DE BREVET EUROPEEN

(11) **EP 0 625 228 B1**
(45) Date de publication et mention de la délivrance du brevet: **13.01.1999**
(21) Numéro de dépôt: 93904144.8
(22) Date de dépôt: 29.01.1993
(51) Int. Cl.: E03B 3/02, E04D 13/08

(54) **RECUPERATEUR AUTOMATIQUE D'EAU PLUVIALE SUR CONDUIT VERTICAL D'EVACUATION**
AUTOMATISCHER REGENWASSERFÄNGER FÜR VERTIKALEN ABFLUSSROHR
AUTOMATIC RAIN WATER COLLECTION DEVICE FOR A VERTICAL DRAINPIPE

(30) Priorité: 31.01.1992 FR 9201319
(43) Date de publication de la demande: 23.11.1994
(73) Titulaire: ROBERT, Marcel, 74960 Cran-Gevrier (FR); BABAZ, Michel, F-74960 Cran-Gevrier (FR)
(72) Inventeur: ROBERT, Marcel, 74960 Cran-Gevrier (FR); BABAZ, Michel, F-74960 Cran-Gevrier (FR)
(74) Mandataire: Poncet, Jean-François
(86) Numéro de dépôt international: FR9300102
(87) Numéro de publication internationale: WO9315281

(56) Documents cités:
- DE-A- 3 105 744
- DE-A- 3 518 302
- DE-U- 8 810 398
- US-A- 3 674 235

## Description

La présente invention concerne un dispositif permettant la récupération d'eau de pluie à l'intérieur d'un conduit d'évacuation, permettant ainsi d'éviter le gaspillage d'eau potable et d'argent.

La récupération de l'eau de pluie se fait traditionnellement en installant un récipient sous la tuyauterie coupée à une certaine hauteur avec impossibilité d'évacuer l'excédant d'eau autrement que par débordement du récipient. Une autre solution consiste à installer une dérivation par manchonnage, comme décrit dans le DE-A-35 18 302.

Une autre solution, décrite dans le DE-U-88 10 398, consiste à réaliser un orifice sur un conduit et à coller sur le conduit une selle comportant un orifice et un manchon correspondant. Cette solution ne permet pas la récupération d'eau de pluie sur un conduit d'évacuation vertical.

Le dispositif objet de l'invention est introduit dans un orifice du conduit, pratiqué en façade, sans sectionner et sans manchonner et il est rendu solidaire dudit conduit à l'aide d'un collier appelé selle, adaptable sur le conduit et dont un orifice coïncide avec l'orifice du conduit.

La récupération de l'eau est réalisée par une goulotte appelée écope. Sa partie à l'intérieur du conduit a son bord extérieur, en totalité ou en partie, en contact avec la paroi interne dudit conduit.

Dans un autre cas, l'écope, tout en occupant une partie seulement du conduit, n'est pas en contact avec la paroi.

La partie de l'écope qui évacue l'eau débouche hors du conduit et prend la forme d'un corps de robinet, ou est prolongée par un corps de robinet.

Ce corps de robinet dans sa partie extérieure au conduit, passe au travers de la selle. La solidarisation du corps de robinet avec la selle est obtenue par rainure sur l'un et tenon ou clavette sur l'autre, ou par la coïncidence d'un plan avec un autre. Les tenons ou clavettes sont appelés bossages. Un épaulement solidaire de la selle est introduit dans l'orifice assurant le positionnement de celle-ci sur le conduit d'évacuation.

Les dessins annexés montrent à titre indicatif, non restrictif, un exemple de réalisation de l'invention.

La figure 1 est une vue en élévation du dispositif dont il s'agit.

La figure 2 montre en élévation et en coupe A-A la selle et son raccord au corps de robinet prolongeant l'écope.

La figure 3 est une vue en coupe d'élévation B-B du corps de robinet prolongeant l'écope.

La figure 4 est une vue en plan de l'écope.

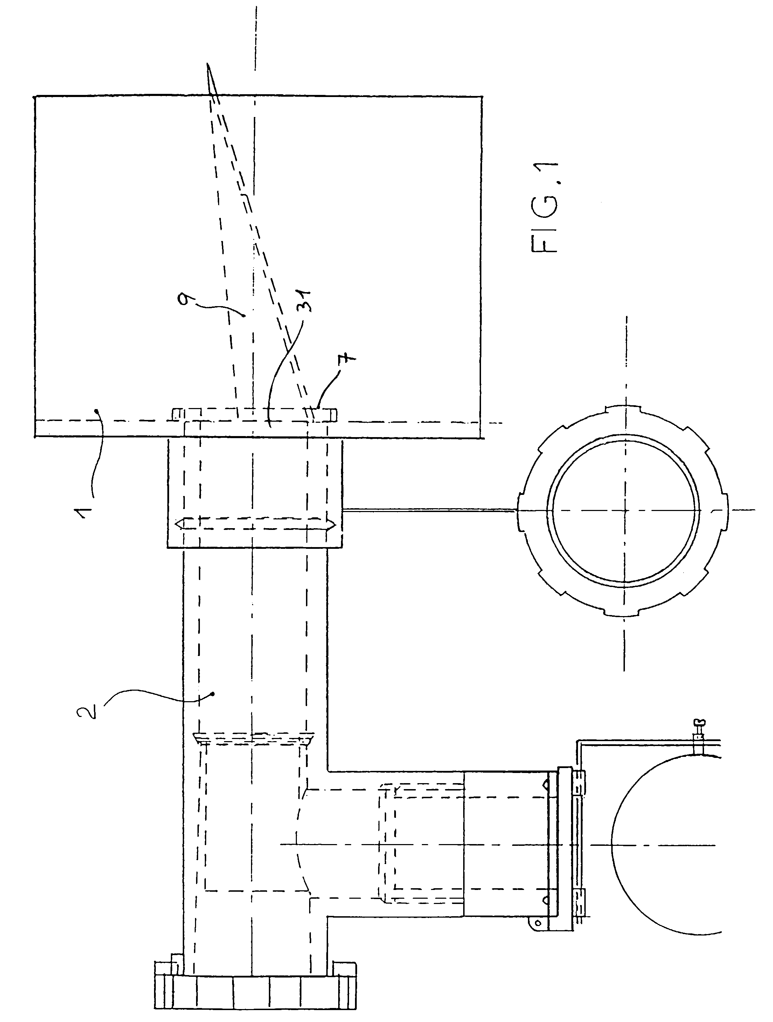

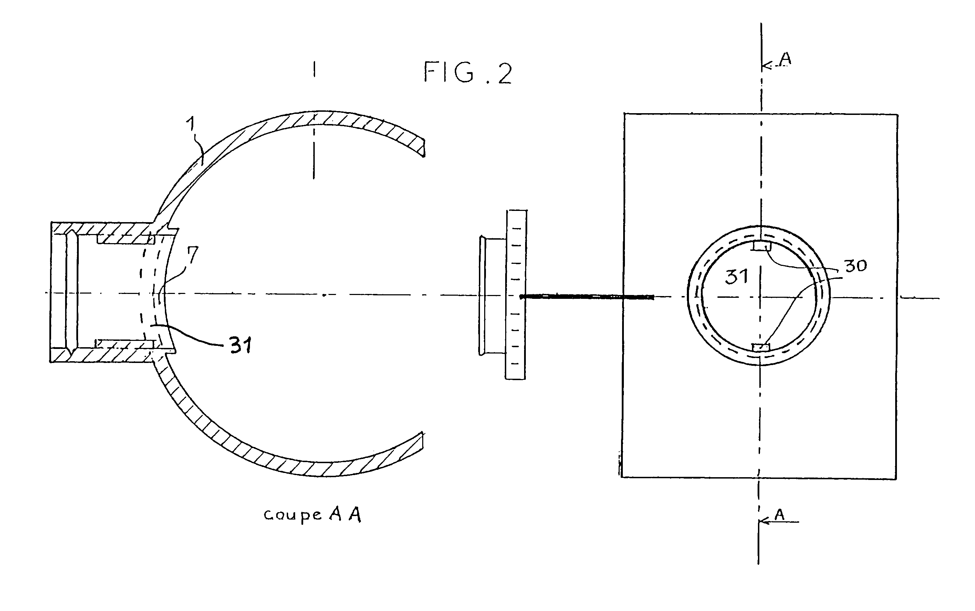

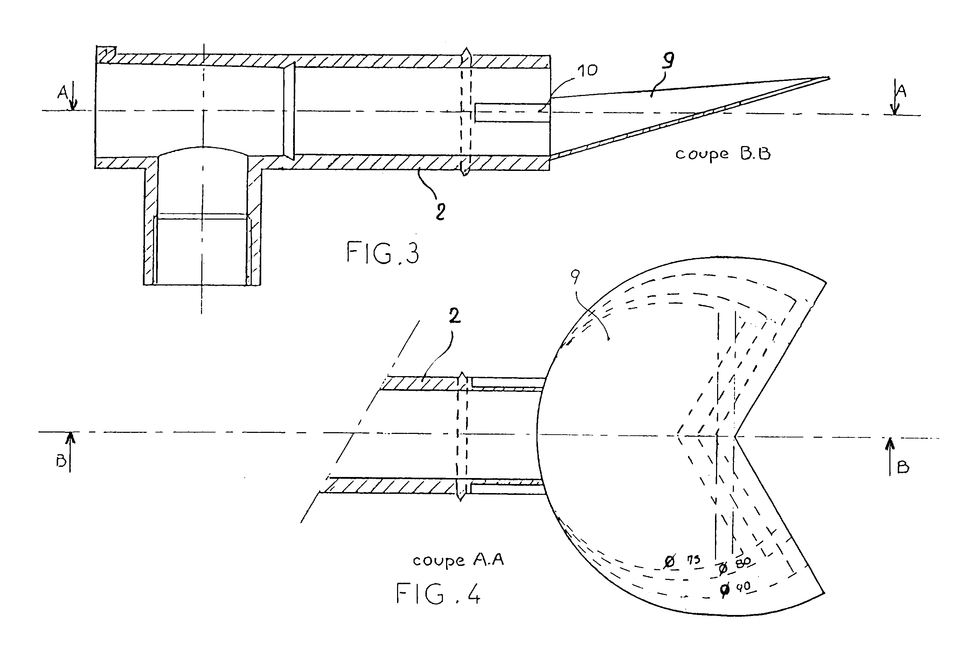

En se référant aux figures 1 et 2, on voit que la selle 1 est traversée par un corps de robinet 2 prolongé par une écope 9 détaillée figure 4.

Un épaulement 7 visible figure 2, introduit dans l'orifice du conduit d'évacuation (non représenté), assure le positionnement de la selle 1. Des bossages 30 (figure 2) servent de guides latéraux aux rainures 10 (figure 3) du corps du robinet 2, empêchant celui-ci de tourner, notamment lors de son emboîtement dans la selle 1.

L'écope 9, dans sa partie à positionner à l'intérieur du conduit d'évacuation, est inclinée pour évacuer l'eau, le point bas étant en direction de sa partie extérieure au conduit. Ainsi, son point le plus bas est le point le plus proche de l'orifice 31 de la selle 1 rendue solidaire du corps de robinet 2. Cette partie de l'écope 9, par exemple élastique, reprend sa forme après compression pour son introduction dans l'orifice pratiqué dans le conduit d'évacuation, ce qui lui permet d'épouser la paroi intérieure dudit conduit et, ainsi, d'autoriser la récupération quasi complète de l'eau y circulant.

Cette partie de l'écope 9 n'occupe qu'une partie de la surface de la section du conduit d'évacuation, ce qui permet l'écoulement du surplus d'eau.

Le corps du robinet 2 peut être associé à un clapet automatique ou à tout autre système de raccordement à un récipient de récupération.

## Revendications

1. Dispositif de récupération d'eau de pluie à l'intérieur d'un conduit d'évacuation, comprenant :
- une selle (1) adaptable sur le conduit d'évacuation et comportant un orifice (31) coïncidant avec l'orifice pratiqué sur le conduit d'évacuation, la selle (1) assurant la solidarisation du dispositif avec le conduit d'évacuation,
caractérisé en ce qu'il comprend :
- une écope (9) susceptible d'être comprimée pour son introduction dans le conduit d'évacuation par un orifice pratiqué en façade dudit conduit et susceptible de reprendre ensuite sa forme pour récupérer de l'eau circulant dans ledit conduit d'évacuation et pour l'évacuer hors dudit conduit,
- une partie extérieure d'écope, traversant la selle (1) pour évacuer l'eau hors dudit conduit d'évacuation.

2. Dispositif selon la revendication 1, caractérisé en ce que la selle (1) est en forme de collier et comprend des moyens de positionnement (7) sur le conduit d'évacuation.

3. Dispositif selon la revendication 2, caractérisé en ce que les moyens de positionnement de la selle (1) comprennent un épaulement(7) pénétrant dans l'orifice du conduit d'évacuation.

4. Dispositif selon l'une quelconque des revendications 1 à 3, caractérisé en ce qu'il comprend en outre des moyens de solidarisation (10, 30) pour solidariser avec la selle (1) un corps de robinet (2) prolongeant l'écope (9) à l'extérieur du conduit d'évacuation.

5. Dispositif selon la revendication 4, caractérisé en ce que les moyens de solidarisation comprennent des plans en coïncidence l'un de l'autre.

6. Dispositif selon la revendication 4, caractérisé en ce que les moyens de solidarisation comprennent des rainures (10) et des bossages (30) empêchant le corps (2) de robinet de tourner lorsqu'il est emboîté dans la selle (1).

7. Dispositif selon l'une quelconque des revendications 1 à 6, caractérisé en ce que l'écope (9), dans sa partie positionnée à l'intérieur du conduit d'évacuation, est inclinée pour évacuer l'eau, son point le plus bas étant le point le plus proche de l'orifice (31) de la selle (1).

8. Dispositif selon l'une quelconque des revendications 1 à 7, caractérisé en ce que l'écope (9) est élastique.

9. Dispositif selon l'une quelconque des revendications 1 à 8, caractérisé en ce que l'écope (9), dans sa partie positionnée à l'intérieur du conduit d'évacuation, comprend un bord extérieur qui vient, en totalité ou en partie, en contact avec la paroi interne dudit conduit d'évacuation pour récupérer l'eau y circulant.

10. Dispositif selon l'une quelconque des revendications 1 à 9, caractérisé en ce que la partie d'écope (9) positionnée à l'intérieur du conduit d'évacuation n'occupe qu'une partie de la surface de la section du conduit d'évacuation, pour permettre l'écoulement du surplus d'eau.

## Patentansprüche

1. Vorrichtung zum Auffangen von Regenwasser im Innern eines Abflußrohres mit:
- einem Sattel (1), der an das Abflußrohr anpaßbar ist und der eine Öffnung (31) aufweist, die mit der Öffnung zusammenpaßt, die im Abflußrohr hergestellt ist, wobei der Sattel (1) die Verbindung der Vorrichtung mit dem Abflußrohr sicherstellt,
gekennzeichnet durch:
- ein Auffangelement (9), welches geeignet ist, zusammengedrückt zu werden, zu seiner Einführung in das Abflußrohr durch eine in der Wand des Rohres hergestellte Öffnung und welches geeignet ist, anschließend wieder seine Form anzunehmen, zum Auffangen des Wassers, das im Abflußrohr fließt und zum Herausleiten desselben aus dem Rohr,
- ein äußeres Stück des Auffangelements, das den Sattel (1) durchsetzt, zum Herausleiten des Wassers aus dem Abflußrohr.

2. Vorrichtung nach Anspruch 1, dadurch gekennzeichnet, daß der Sattel (1) die Form einer Schelle hat und Mittel (7) zum Positionieren auf dem Abflußrohr aufweist.

3. Vorrichtung nach Anspruch 2, dadurch gekennzeichnet, daß die Mittel zum Positionieren des Sattels (1) eine Schulter (7) aufweisen, die die Öffnung des Abflußrohres durchsetzt.

4. Vorrichtung nach einem der Ansprüche 1 bis 3, dadurch gekennzeichnet, daß sie ferner Verbindungsmittel (10, 30) aufweist, um mit dem Sattel (1) ein Hahngehäuse (2) zu verbinden, welches das Auffangelement (9) an der Außenseite des Abflußrohres verlängert.

5. Vorrichtung nach Anspruch 4, dadurch gekennzeichnet, daß die Verbindungsmittel Flächen aufweisen, die aneinander passen.

6. Vorrichtung nach Anspruch 4, dadurch gekennzeichnet, daß die Verbindungsmittel Nuten (10) und Buckel (30) aufweisen, die eine Verdrehung des Hahngehäuses (2) verhindern, wenn es in den Sattel (1) eingesetzt ist.

7. Vorrichtung nach einem der Ansprüche 1 bis 6, dadurch gekennzeichnet, daß das Auf fangelement (9) mit seinem Stück, das im Inneren des Abflußrohres angeordnet ist, geneigt ist, zum Abfließen des Wassers, wobei seine unterste Stelle die der Öffnung (31) des Sattels (1) am nächsten gelegene Stelle ist.

8. Vorrichtung nach einem der Ansprüche 1 bis 7, dadurch gekennzeichnet, daß das Auffangelement (9) elastisch ist.

9. Vorrichtung nach einem der Ansprüche 1 bis 8, dadurch gekennzeichnet, daß das Auffangelement (9) an seinem Stück, das im Inneren des Abflußrohres angeordnet ist, einen äußeren Rand aufweist, der vollständig oder teilweise die Innenwand des Abflußrohres berührt, um das daran abfließende Wasser aufzufangen.

10. Vorrichtung nach einem der Ansprüche 1 bis 9, dadurch gekennzeichnet, daß das im Innern des Abflußrohres angeordnete Stück des Auffangelements (9) nur einen Teil der Querschnittsoberfläche des Abflußrohres einnimmt, um ein Abfließen des Wasserüberschusses zu ermöglichen.

## Claims

1. Device for collecting rain water from inside a drain pipe, comprising :
- a saddle (1) adapted to be fitted to the drain pipe and having an orifice (31) coincident with the orifice formed on the drain pipe, the saddle (1) fastening the device to the drain pipe,
characterised in that it comprises :
- a scoop (9) adapted to be compressed to insert it into the drain pipe through an orifice formed in the side of said pipe and adapted thereafter to resume its shape to collect water flowing in said drain pipe and to remove it from said pipe,
- an outside part of scoop, passing through the saddle (1) to remove water from said drain pipe.

2. Device according to claim 1, characterised in that the saddle (1) is in the form of a collar and comprises locating means (7) for locating it on the drain pipe.

3. Device according to claim 2, characterised in that the saddle (1) locating means comprise a shoulder (7) entering the orifice in the drain pipe.

4. Device according to any one of claims 1 to 3, characterised in that it further comprises fastening means (10, 30) for fastening to the saddle (1) a tap body (2) extending the scoop (9) outside the drain pipe.

5. Device according to claim 4, characterised in that the fastening means comprise planes which are coincident with each other.

6. Device according to claim 4, characterised in that the fastening means comprise grooves (10) and bosses (30) preventing the tap body (2) from rotating when it is nested in the saddle (1).

7. Device according to any one of claims 1 to 6, characterised in that the scoop (9), in its part inside the drain pipe, is inclined to remove water, its lowest point being the point nearest the orifice (31) in the saddle (1).

8. Device according to any one of claims 1 to 7, characterised in that the scoop (9) is elastic.

9. Device according to any one of claims 1 to 8, characterised in that the scoop (9), in its part inside the drain pipe, comprises an outside edge, which is wholly or partially in contact with the inside wall of said drain pipe to collect water flowing therein.

10. Device according to any one of claims 1 to 9, characterised in that the part of the scoop (9) inside the drain pipe occupies only part of the cross-section area of the drain pipe, to enable surplus water to flow.
